Europäisches Patentamt

European Patent Office

Office européen des brevets

(11) Publication number: **0 202 810**
**B1**

(12) **EUROPEAN PATENT SPECIFICATION**

(45) Date of publication of patent specification: **23.01.91**

(51) Int. Cl.⁵: **C 01 B 33/20**

(21) Application number: **86303432.8**

(22) Date of filing: **06.05.86**

(54) **Method of producing organoclays.**

(30) Priority: **04.05.85 GB 8511416**

(43) Date of publication of application:
**26.11.86 Bulletin 86/48**

(45) Publication of the grant of the patent:
**23.01.91 Bulletin 91/04**

(84) Designated Contracting States:
**AT BE CH DE FR GB IT LI LU NL SE**

(56) References cited:
**GB-A-2 017 072**
**US-A-2 531 427**
**US-A-4 474 706**

(73) Proprietor: **AKZO N.V.**
**Velperweg 76**
**NL-6824 BM Arnhem (NL)**

(72) Inventor: **Tatum, John P.**
**41 The Close, Great Dunsmow**
**Essex, CM6 IEW (GB)**

(74) Representative: **Schalkwijk, Pieter Cornelis et al**
**AKZO N.V., Patent Department (Dept. CO), P.O.**
**Box 9300**
**NL-6800 SB Arnhem (NL)**

Courier Press, Leamington Spa, England.

## Description

This invention relates to organoclay materials, that is to say materials formed by the reaction of a smectite clay, such as bentonite, hectorite or montmorilonite, with a quaternary ammonium compound. These materials are used, for example, as additives for modifying or controlling thixotropic properties of various fluids, such as paints and drilling muds. The purpose for which organoclays are incorporated in such fluids is generally to increase the initial yield point, i.e. the viscosity at zero shear as extrapolated from measurements made at various shear rates.

Many types of organoclay materials are known.

U.S.—A—4 474 706 discloses a dry process for the production of an organoclay material in which process a mixture of melted quaternary ammonium salts is blended with a dry clay, the preferred and only specific mixture disclosed being a combination of di-methyl dihydrogenated tallow ammonium and methyl benzyl dihydrogenated tallow ammonium salts, i.e. salts with the same number of hydrogenated tallow radicals on the nitrogen atom of the molecule and which differ only marginally in molecular weight.

GB—A—2 017 072 discloses the use of organoclays, formed using various quaternary ammonium compounds, as rheological agents in non-aqueous fluid systems, particularly methyl benzyl dialkyl ammonium compounds or dibenzyl dialkyl ammonium compounds, including such dihydrogenated tallow compounds, and mixtures thereof, i.e. single compounds or mixtures of compounds having the same number of hydrogenated tallow radicals on the nitrogen atom of the molecule.

U.S.—A—2 531 427 also discloses the use of organoclays formed using various "-onium" compounds including quaternary ammonium compounds with various single long chain radicals suchy as dodecyl.

In a solvent system an organoclay under suitable conditions will disperse and solvate, and the solvated organoclay will interact to give the system a structure which determines its thixotropic properties. The present invention is concerned with organoclays for use in oil/mud systems for use as drilling fluids, and it is believed that for different types of oil, the rate of solvation of the organoclay will differ.

The quaternary ammonium compounds used may vary according to the solvent systems into which the organoclay is to be incorporated. For polar solvent systems, e.g. those based on alcohols, the compound used may for example be a $C_{12}$ alkyl ammonium compound. For aromatic solvent systems e.g. toluene based, a di-methyl hydrogenated tallow benzyl ammonium compound may be used. For aliphatic solvent systems, e.g. white spirit based, a di-methyl di-hydrogenated tallow ammonium compound may be used. However, for systems having a very low aromatic content, such as highly refined "white oils", such hydrogenated tallow compounds are slow to solvate.

In order to increase the rate of solvation the organic component of the organoclay should be increased in size where the solvent system is one in which solvation is relatively difficult as compared with one in which solvation is relatively easy. Solvent systems based on heavy oils, such as diesel oil provide relatively easy solvation, whereas solvent systems based on more highly purified, less aromatic oils ("white oils") are more difficult to solvate, and the present invention is concerned with the preparation of organoclays mainly intended for use in the latter type of system.

Tests carried out to show the effect of increasing the organic content of the organoclay by using greater quantities of quaternary ammonium compounds, which therefore utilises a higher milli-equivalent of the ion exchange sites on the clay, have shown that a good initial yield may be obtained in this way in white oil systems, but the improvement is not maintained after ageing of the system.

Essentially, the present invention is concerned with the possibility of increasing the total organic component of the organoclay without simultaneously increasing the utilisation of exchange sites on the clay.

In general, some improvement can be obtained by increasing the carbon chain content of the quaternary compound, for example by utilising trihydrogenated tallow instead of di-hydrogenated tallow compounds. However, the use of such more complex compounds inevitably incurs significant increased costs.

Tests which we have carried out to determine whether any useful advantage can be obtained by replacing only part of the di-hydrogenated tallow compound by the corresponding tri-hydrogenated tallow compound have indicated not only that the use of a mixture of such compounds in the production of the organoclay can indeed be beneficial, but, surprisingly, also that over a range of ratios the results may be better than those obtained when using either the di-hydrogenated tallow compound or the tri-hydrogenated compound alone in equivalent quantities. Such tests utilising equivalent quantities of tri-hydrogenated tallow ammonium compounds instead of di-hydrogenated tallow compounds have produced results which are inferior to tests utilising mixtures of such compounds, which thus suggests that there is an optimum carbon content which can be determined experimentally for any given system. Further tests have shown that the ratio of the two compounds in the organoclay which provides the greatest improvement is dependent at least on the system in which the organoclay material is to be used.

A similar result does not appear to be achieved by blending two different organoclays which are each made using a different quaternary compound, but a similar result may be obtained by the use of a single quatenary compound having an optimised average carbon chain length.

The present invention residues in a method of producing an organoclay material adapted specifically for use in a given oil/mud drilling fluid system by testing the system with several different organoclays each

2

made using a mixture of hydrogenated tallow quaternary ammonium compounds in differing proportions, each compound having differing numbers of hydrogenated tallow radicals on the nitrogen atom of the molecule so that each mixture has a different average carbon chain length and C to N ratio, and thereby determining the C to N ratio in such quaternary ammonium compounds which is optimal with respect to the yield point of the system to which the organoclay has been added, and then manufacturing an organoclay for use in that system substantially in accordance with the determined optimum C to n ratio.

The following examples and tests illustrate the way in which variation of the carbon content of the quaternary ammonium compounds used in the preparation of organoclays affects the properties of drilling muds in which such organoclays are incorporated.

### Example 1

An organoclay was made by a dry process using a Wyoming Bentonite clay with 40 m.Eq. tri-hydrogenated tallow methyl ammonium chloride (3HT) and 45 m.Eq. di-hydrogenated tallow di-methyl ammonium chloride (2HT).

### Test 1

The product was dried and milled and tested by incorporation in a commercially available drilling mud (system *a*) of the white oil type in a quantity of 8 ppb. The yield point of the mud system was then determined both before and after ageing by using a Fann 35SA viscometer and taking readings at various rpm. The plastic viscosity PV is calculated as the difference between the 600 rpm and 300 rpm reading and the yield YP is calculated as the difference between the 300 rpm reading and the PV value. The yield point should have a high value, but the ratio of PV to YP should be low.

The results were as follows:

| Test | 600/300 | 200/100 | 6/3 | PV | YP |
|---|---|---|---|---|---|
| I (initial) | 49/30 | 23/16 | 6/5 | 19 | 11 |
| (aged) | 76/50 | 32/29 | 12/10 | 26 | 24 |

Based purely on the number of hydrogenated tallow chains, if all the quaternary compound was the 2HT compound, the m.Eq. exchange capacity of the organoclay used in Test 1 would be $45 + (1.5 \times 40) = 105$. However, only 85 m.Eq. of the active sites were used and the mixture appeared to work well in the system tested.

### Test 1A

For comparison a standard organoclay including only 2HT was tested in the same mud system at the equivalent calculated level (105 m.Eq.) with the following results:

| Test | 600/300 | 200/100 | 6/3 | PV | YP |
|---|---|---|---|---|---|
| IA (initial) | 40/20 | 14/8 | 2/1 | 20 | 0 |
| (aged) | 102/67 | 53/38 | 15/13 | 35 | 32 |

Increasing the carbon content of the organoclay without a corresponding increase in the usage of exchange sites on the clay thus gave a product that has a good initial yield and will not collapse on ageing.

The organoclay of Example 1 was also tested in two other mud systems as follows:

(b) a system having no time or styrene/polybutadiene emulsion and a different emulsifier system to that of mud system *a*;

(c) the mud system *a* as used in Test 1 but without styrene/polybutadiene emulsion which is normally used in that system to enhance the organoclay performance.

Tests were carried out using these two mud systems with the organoclay made in accordance with Example 1 and the standard organoclay as used in Test 1A at various levels as follows:

| Test | Mud System | Organoclay | Concentration (ppb) |
|---|---|---|---|
| 2 | b | Ex. I | 10 |
| 2A | b | Std. | 10 |
| 3 | b | Ex. I | 12 |
| 3A | b | Std. | 12 |
| 4 | c | Ex. I | 8 |
| 4A | c | Std. | 8 |

The results were as follows:

| Test | 600/300 | 200/100 | 6/3 | PV | YP |
|---|---|---|---|---|---|
| 2 (initial) | 47/26 | 18/11 | 2/1 | 21 | 5 |
| (aged) | 62/33 | 23/13 | 2/1 | 29 | 4 |
| 2A (initial) | 30/15 | 10/5 | 1/0 | 15 | 0 |
| 3 (initial) | 58/34 | 25/15 | 4/3 | 24 | 10 |
| (aged) | 68/38 | 27/15 | 3/2 | 30 | 8 |
| 3A (initial) | 34/17 | 11/6 | 1/0 | 17 | 0 |
| 4 (initial) | 36/23 | 17/12 | 5/4 | 13 | 10 |
| (aged) | 44/27 | 21/14 | 5/4 | 17 | 10 |
| 4A (initial) | 25/13 | 8/4 | 1/0 | 12 | - 1 |
| (aged) | 52/32 | 25/16 | 5/4 | 20 | 12 |

These results show that in mud system $c$ (that is to say system $a$ without the usual styrene butadiene polymer emulsion) gave good results despite the omission of the styrene butadiene polymer, whereas in system $b$ good results were obtained at somewhat higher concentrations.

To test the effect of varying the ratio of 2HT to 3HT a range of further organoclays were made by the same process as for Example 1, but using different proportions of 2HT and 3HT to give a total theoretical m.Eq. of 85 in each case. The ratios of 2HT to 3HT used in Example II to V were as follows:

| Example No. | m.Eq. 2HT | m.Eq. 3HT |
|---|---|---|
| Example II | 40 | 45 |
| Example III | 55 | 30 |
| Example IV | 65 | 20 |
| Example V | 75 | 10 |

The product of Examples II to V were tested in the mud system $b$ as used in tests 2 and 3 at 8 and 10 ppb, as follows:

| Test | System | Organoclay | Concentration ppb |
|---|---|---|---|
| 5 | b | Example II | 8 |
| 6 | b | Example II | 10 |
| 7 | b | Example III | 8 |
| 8 | b | Example III | 10 |
| 9 | b | Example IV | 8 |
| 10 | b | Example IV | 10 |
| 11 | b | Example V | 8 |
| 12 | b | Example V | 10 |

The results were as follows:

| Test | 600/300 | 200/100 | 6/3 | PV | YP |
|---|---|---|---|---|---|
| 5 (Initial) | 30/20 | 13/7 | 1/0 | 18 | 2 |
| (aged) | 47/25 | 17/9 | 1/1 | 22 | 3 |
| 6 (Initial) | 45/25 | 18/10 | 2/1 | 20 | 5 |
| (aged) | 51/26 | 18/10 | 1/1 | 25 | 1 |
| 7 (Initial) | 29/22 | 15/3 | 1/1 | 17 | 5 |
| (aged) | 52/28 | 20/9 | 2/1 | 24 | 4 |
| 8 (Initial) | 47/27 | 19/11 | 2/1 | 20 | 7 |
| (aged) | 62/34 | 24/13 | 2/1 | 28 | 6 |
| 9 (Initial) | 35/18 | 12/6 | 1/1 | 17 | 1 |
| (aged) | 51/27 | 19/11 | 2/1 | 24 | 3 |
| 10 (Initial) | 40/25 | 14/8 | 1/1 | 18 | 4 |
| (aged) | 59/32 | 23/13 | 2/1 | 27 | 5 |
| 11 (Initial) | 31/16 | 10/5 | 1/1 | 15 | 1 |
| (aged) | 47/26 | 19/11 | 2/1 | 21 | 5 |
| 12 (Initial) | 38/20 | 13/7 | 1/1 | 18 | 2 |
| (aged) | 59/35 | 24/14 | 3/2 | 26 | 7 |

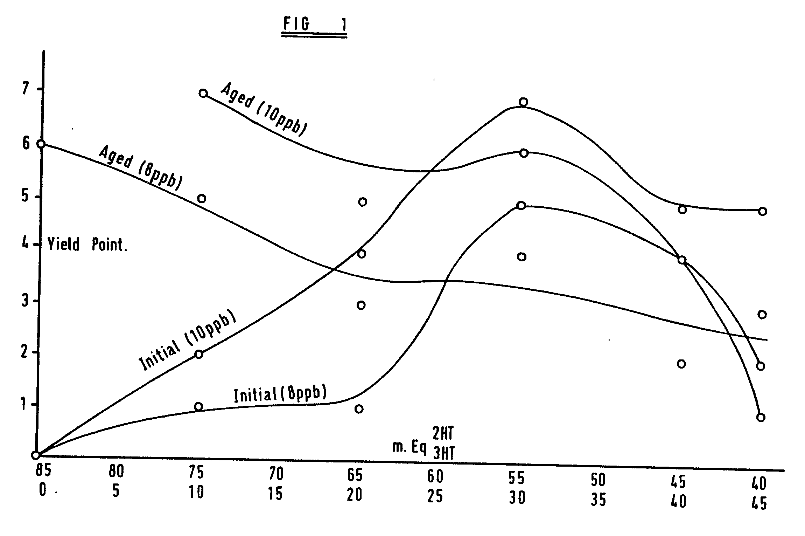

The results of tests 5 to 12 are plotted in Figure 1. From this it appears that in this system an optimum value of initial yield is obtained using an organoclay made with a 3HT/2HT ratio of 30 to 55, but at this ratio a drop in yield is observed on ageing and it would appear that if initial and aged yields are taken into account together, the optimum ratio is likely to be in the region of 25 to 60 for system *b* although the results of tests 9 and 10 appear to be somewhat anomalous.

The products of Examples II to V were also tested in mud system *a*, as used in Test 1, together with the products of further Examples VI and VII of organoclays made as in Example 1 but using proportions of 2HT and 3HT as follows:

| Example No. | m.Eq. 2HT | m.Eq. 3HT |
|---|---|---|
| VI | 60 | 25 |
| VII | 80 | 5 |

In all cases these organoclays were tested in mud systems *a* at a concentration of 8 ppb as follows:

| Test | System | Organoclay |
|---|---|---|
| 13 | a | Example II |
| 14 | a | Example III |
| 15 | a | Example IV |
| 16 | a | Example V |
| 17 | a | Example VI |
| 18 | a | Example VII |

The results were as follows:

| Test | 600/300 | 200/100 | 6/3 | PV | YP |
|------|---------|---------|-----|-----|-----|
| 13(initial) | 53/32 | 25/17 | 7/6 | 20 | 12 |
| (aged) | 81/52 | 41/29 | 12/10 | 29 | 23 |
| 14 (initial) | 55/34 | 26/18 | 6/5 | 21 | 12 |
| (aged) | 83/54 | 43/29 | 12/10 | 29 | 25 |
| 15(initial) | 68/43 | 33/22 | 6/5 | 25 | 17 |
| (aged) | 106/68 | 54/38 | 15/13 | 38 | 30 |
| 16(initial) | 73/46 | 37/25 | 6/5 | 27 | 19 |
| (aged) | 99/64 | 49/35 | 12/11 | 35 | 29 |
| 17(initial) | 55/34 | 36/18 | 6/4 | 21 | 13 |
| (aged) | 83/54 | 44/31 | 14/11 | 29 | 25 |
| 18(initial) | 67/42 | 33/21 | 5/4 | 25 | 17 |
| (aged) | 112/74 | 58/38 | 13/11 | 35 | 36 |

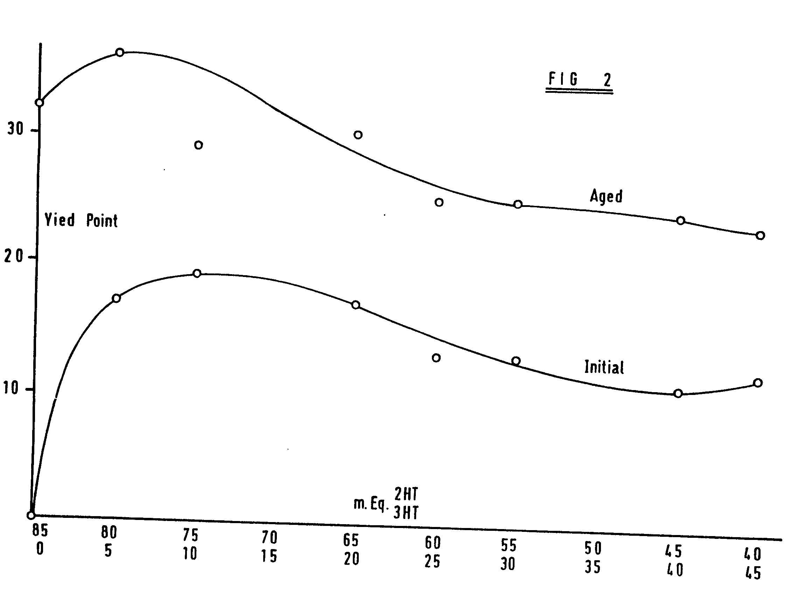

The results of tests 13 to 18 are shown in Figure 2, from which it is clear that for system *a* the optimum ratio appears to be in the region of 5/80 3HT to 2HT.

If the average carbon chain length of the hydrogenated tallow radical is assumed to be 17.16 then the average number of carbon atoms in one molecule of 2HT (i.e. the C to N ratio) will be 36.32 (including methyl C) whereas for 3HT it will be 52.48. For a mixed system in which the 3HT/2HT ratio is 5/80, the average C to N ratios will thus be 37.27, whilst for a mixed system in which the 3HT/2HT ratio is 25/60, the average value will be 41.07.

It will be seen that in this way it is possible to calculate an optimum C to N ratio for any particular system, by trials using varying ratios of quaternary ammonium compounds differing in carbon content. In this way, the optimum C to N ratio for the system under investigation can be determined and in production that ratio can be maintained by using an organoclay made by reacting the basic clay with the different quaternary compounds in the optimum ratio as determined.

Whilst it may be thought that it would also be possible to obtain similar results by utilising mixtures of different organoclays, each made wholly using one of the tested quaternary compounds, the organoclays being mixed in the proportions necessary to achieve the optimum C to N ratio as determined, further tests have indicated otherwise.

Tests 19 to 23 were carried out in mud system *a* using mixtures of organoclays as follows:

| Test | System | 3HT organoclay* (ppb) | 2HT organoclay*(ppb) |
|------|--------|-----------------------|----------------------|
| 19 | a | 8 | 0 |
| 20 | a | 4 | 4 |
| 21 | a | 2 | 6 |
| 22 | a | 1 | 7 |

*85 m.Eq.

The results were as follows:

| Test | 600/300 | 200/100 | 6/3 | PV | YP |
|------|---------|---------|-----|-----|-----|
| 19(initial) | 35/22 | 16/11 | 4/4 | 13 | 9 |
| (aged) | 48/30 | 23/15 | 7/6 | 18 | 12 |
| 20(initial) | 35/20 | 15/9 | 3/3 | 15 | 5 |
| (aged) | 71/45 | 74/23 | 11/10 | 26 | 19 |
| 21(initial) | 35/19 | 14/9 | 2/2 | 16 | 3 |
| (aged) | 73/46 | 35/23 | 9/8 | 27 | 19 |
| 22(initial) | 41/22 | 17/11 | 3/2 | 19 | 3 |
| (aged) | 86/56 | 42/28 | 10/9 | 32 | 24 |

Whilst these results suggest that there may be a slight peak at the same ratio as determined by Tests 13 to 18 in this mud system, the absolute values of yield point are significantly lower for both initial and aged tests.

It is possible that the results obtained utilising an organoclay made usng a single quaternary ammonium compound chosen to have an average C to N ratio which corresponds closely to the optimum C to N ratio as determined may be more closely similar to those being organoclays made by reacting a mixture of quaternary compounds with a smectite clay. Thus, for example, a specific ratio of 3HT to 2HT may correspond to the same C to N ratio as that of a single specific compound which would behave similarly.

Tests were accordingly carried out to evaluate this possibility, and to check the effect of attaining the same average C to N ratio by using the appropriate proportions of different quaternary compounds. For this purpose a range of further organoclays were made using 2HT and 3HT, HT (trimethyl hydrogenated tallow ammonium chloride) and 3HT, and 2HTB (methyl di-hydrogenated tallow benzyl ammonium chloride) as follows:

| Example No. | m.Eq.2HT | m.Eq.3HT | m.Eq.HT | m.Eq.2HTB | av.mol.wt. |
|-------------|----------|----------|---------|-----------|------------|
| VIII | 53 | 29 | — | — | 655 |
| IX | — | 55 | 27 | — | 652 |
| X | — | — | — | 82 | 656 |

As will be observed in each of these examples the total m.Eq. of quaternary ammonium compound was 82 and the average molecular weight is substantially constant, representing a C to N ratio of approximately 41 to 42 in each case.

The organoclays of examples VIII to X were tested at 8 ppb in a drilling mud composition containing a polymer emulsion in tests 23 to 25 as follows:

| Test | Organoclay | 600/300 | 200/100 | 6/3 | PV | YP |
|------|-----------|---------|---------|-----|-----|-----|
| 23 (inital) | Ex.VIII | 64/43 | 35/24 | 11/10 | 21 | 22 |
| (aged) | --- | 87/55 | 43/30 | 15/14 | 32 | 23 |
| 24 (initial) | Ex.IX | 62/41 | 34/24 | 11/10 | 21 | 20 |
| (aged) | --- | 80/52 | 41/29 | 15/14 | 28 | 24 |
| 25 (initial) | Ex.X | 69/46 | 36/25 | 9/8 | 23 | 23 |
| (aged) | --- | 96/60 | 54/39 | 18/7 | 36 | 24 |

It can be seen that the initial yield point in each case is substantially identical and that the aged or final yield point in each case is also substantially identical, suggesting that it is the average C to N ratio which is responsible for the properties of the organoclay in this respect, regardless of whether the chosen average value is achieved by mixing 2HT and 3HT or 3HT and HT in the appropriate portions or by using a single compound 2HTB of the same molecular weight.

Further tests were carried out using these organoclays in the same drilling mud without polymer emulsion at 10 ppb organoclay in tests 26 to 28 and 8 ppb organoclay in tests 29 to 31 as follows:

| Test | Organoclay | 600/300 | 200/100 | 6/3 | PV | YP |
|------|-----------|---------|---------|-----|-----|-----|
| 26 (initial) | Ex.VIII | 58/38 | 28/20 | 8/7 | 20 | 18 |
| (aged) | --- | 100/65 | 48/30 | 8/7 | 35 | 30 |
| 27 (initial) | Ex.IX | 82/51 | 46/34 | 17/15 | 31 | 20 |
| (aged) | --- | 114/74 | 56/36 | 12/11 | 40 | 34 |
| 28 (initial) | Ex.X | 65/41 | 32/22 | 9/8 | 24 | 17 |
| (aged) | --- | 102/64 | 43/27 | 7/6 | 38 | 26 |
| 29 (initial) | Ex.VIII | 46/29 | 20/15 | 6/5 | 17 | 12 |
| (aged) | --- | 80/52 | 41/29 | 14/13 | 28 | 24 |
| 30 (initial) | IX | 50/31 | 27/22 | 8/7 | 19 | 12 |
| (aged) | --- | 80/54 | 44/32 | 17/16 | 26 | 28 |
| 31 (initial) | Ex.X | 49/30 | 24/16 | 7/6 | 19 | 11 |
| (aged) | --- | 71/46 | 34/23 | 10/9 | 25 | 21 |

Again the test results do not differ significantly according to the organoclay used with regard to the values of initial yield point, but there is rather more variation in final yield point value in the absence of emulsion at both levels of organoclay, and these tests also point to the equivalence of 2HTB in this system with mixtures of 2HT and 3HT or 3HT and HT affording the same average molecular weight.

As a further test of the equivalence of mixed quaternary compounds and quaternary compounds of the same molecular weight or C to N ratio an organoclay was prepared using a mixture of HT and 3HT in proportions such as to give an average theoretical molecular weight of 576, i.e. that of 2HT, and compared with an organoclay made using an equivalent amount of 2HT alone, with the following results:

| Test | Organoclay | 600/300 | 200/100 | 6/3 | PV | YP |
|------|-----------|---------|---------|-----|-----|-----|
| 32 | HT/3HT | 33/20 | 14/8 | 2/1 | 13 | 7 |
| 33 | 2HT | 37/22 | 15/9 | 2/1 | 15 | 7. |

Again the equivalence of the results is evident.

## Claims

1. A method of producing an organoclay material adapted specifically for use in a given oil/mud drilling fluid system by testing the system with several different organoclays each made using a mixture of hydrogenated tallow quaternary ammonium compounds in differing proportions, each compound having differing numbers of hydrogenated tallow radicals on the nitrogen atom of the molecule so that each mixture has a different average carbon chain length and C to N ratio, and thereby determining the C to N ratio in such quaternary ammonium compounds which is optimal with respect to the yield point of the system to which the organoclay has been added, and then manufacturing an organoclay for use in that system substantially in accordance with the determined optimum C to N ratio.

2. A method according to Claim 1 utilising mixtures of quaternary ammonium compounds including one, two, or three hydrogenated tallow groups on the nitrogen atom.

3. A method according to Claim 1 wherein the quaternary ammonium compounds used for testing the system comprise dimethyl di-hydrogenated tallow ammonium and methyl tri-hydrogenated tallow ammonium cations.

4. A method according to Claim 1 wherein the quaternary ammonium compounds used for testing the system comprise methyl tri-hydrogenated tallow ammonium and tri-methyl hydrogenated tallow ammonium cations.

5. A method according to any one of Claims 1 to 3, wherein the organoclay is manufactured using a mixture of said quaternary ammonium compounds in a ratio selected to afford substantially said optimum C to N ratio.

6. A method according to any one of Claims 1 to 3 wherein said organoclay is manufactured utilising a selected single quaternary ammonium compound affording substantially said optimum C to N ratio.

# EP 0 202 810 B1

## Patentansprüche

1. Verfahren zur Herstellung eines organisch modifizierten Tonmaterials, das speziell zur Verwendung in einem vorgegebenen Öl/Schlammm-Bohrflüssigkeitssystem geeignet ist, durch Testen des Systems mit mehreren verschiedenen organisch modifizierten Tonen, von denen jeder unter Verwendung eines Gemisches quaternärer Ammoniumverbindungen hydrierten Talgs in unterschiedlichen Verhältnissen hergestellt ist, wobei jede Verbindung eine unterschiedliche Anzahl von hydrierten Talgradikalen am Stickstoffatom des Moleküls besitzt, so daß jedes Gemisch eine unterschiedliche mittlere Kohlenstoffkettenlänge und ein unterschiedliches C-zu-N-Verhältnis besitzt, und dadurch Bestimmen des C-zu-N-Verhältnisses in solchen quaternären Ammoniumverbindungen, das im Hiblick auf die Fließgrenze des Systems, dem der organisch modifizierte Ton zugesetzt worden ist, optimal ist, und dann Herstellen eines organisch modifizierten Tons zur Verwendung in diesem System im wesentlichen in Übereinstimmung mit dem bestimmten optimalen C-zu-N-Verhältnis.

2. Verfahren nach Anspruch 1, dadurch gekennzeichnet, daß Gemische von quaternären Ammoniumverbindungen eingesetzt werden, die eine, zwei oder drei hydrierte Talggruppen am Stickstoffatom einschließen.

3. Verfahren nach Anspruch 1, dadurch gekennzeichnet, daß die quaternären Ammoniumverbindungen, die zum Testen des Systems verwendet werden, Dimethylammoniumkationen mit zwei hydrierten Talgresten und Methylammoniumkationen mit drei hydrierten Talgresten umfassen.

4. Verfahren nach Anspruch 1, dadurch gekennzeichnet, daß die quaternären Ammoniumverbindungen, die zum Testen des Systems verwendet werden, Methylammoniumkationen mit drei hydrierten Talgresten und Trimethylammoniumkationen mit einem hydrierten Talgrest umfassen.

5. Verfahren nach einem der Ansprüche 1 bis 3, dadurch gekennzeichnet, daß der organisch modifizierte Ton unter Verwendung eines Gemisches besagter quaternärer Ammoniumverbindungen in einem Verhältnis hergestellt wird, das so gewählt ist, daß im wesentlichen besagtes optimales C-zu-N-Verhältnis erreicht wird.

6. Verfahren nach einem der Ansprüche 1 bis 3, dadurch gekennzeichnet, daß besagter organisch modifizierter Ton unter Verwendung einer einzigen ausgewählten quaternären Ammoniumverbindungen hergestellt wird, wobei im wesentlichen besagtes optimales C-zu-N-Verhältnis erreicht wird.

## Revendications

1. Procédé de fabrication d'un matériau organo-argileux, spécifiquement adapté à l'emploi dans un système fluide huile/bou de forage par essai de système avec plusieurs matériaux organo-argileux différents, chacun étant fait en utilisant un mélange de composés de (suif hydrogéné)-ammonium quaternaire dans différentes proportions, chaque composé ayant des nombres différents de radicaux de suif hydrogéné sur l'atome d'azote de la molécule, de telle sorte que chaque mélange a une longueur moyenne de chaine carbonée et un rapport C sur N différents et, par détermination de cette manière, dans ces composés d'ammonium quaternaire, du rapport C sur N qui est optimal en ce qui concerne la limite élastique du système auquel le corps organo-argileux a été ajouté, puis par fabrication d'un matériau organo-argileux destiné à être utilisé dans ce système substantiellement en accord avec le rapport C sur N optimal déterminé.

2. Procédé, selon la revendication 1, utilisant des mélanges de composés d'ammonium quaternaire comprenant un, deux, ou trois groupes de suif hydrogéné sur l'atome d'azote.

3. Procédé, selon la revendication 1, dans lequel les composés d'ammonium quaternaire utilisés pour soumettre le système à un essai comprennent des cations diméthyl-di(suif hydrogéné)-ammonium et des cations méthyl-tri(suif hydrogéné)-ammonium.

4. Procédé, selon la revendication 1, dans lequel les composés d'ammonium quaternaire utilisés pour soumettre le système à un essai comprennent des cations diméthyl-tri(suif hydrogéné)-ammonium et des cations triméthyl-suif hydrogéné ammonium.

5. Procédé, selon l'une quelconque des revendications 1 à 3, dans lequel le matériau organo-argileux est fabriqué en utilisant un mélange desdits composés d'ammonium quaternaire dans un rapport choisi aboutir substantiellement audit rapport C sur N optimal.

6. Procédé, selon l'une des revendications 1 à 3, dans lequel ledit matériau organo-argileux est fabriqué en utilisant un composé d'ammonium quaternaire, choisi pour aboutir substantiellement audit rapport C sur N optimal.

9

FIG 1

Yield Point.

Aged (10ppb)

Aged (8ppb)

Initial (10ppb)

Initial (8ppb)

m. Eq 2HT / 3HT

| 85 | 80 | 75 | 70 | 65 | 60 | 55 | 50 | 45 | 40 |
| 0 | 5 | 10 | 15 | 20 | 25 | 30 | 35 | 40 | 45 |

EP 0 202 810 B1

FIG 2

EP 0 202 810 B1